# EUROPEAN PATENT APPLICATION

(11) **EP 1 037 414 A2**
(43) Date of publication of application: **20.09.2000**
(21) Application number: 00105314.9
(22) Date of filing: 16.03.2000
(51) Int. Cl.: H04B 10/155

(54) **Optical transmission circuit controlling input voltage amplitude of optical transmission circuit drive stage according to pulse current**

(30) Priority: 17.03.1999 JP 7271099
(71) Applicant: NEC CORPORATION, Tokyo (JP)
(72) Inventor: Kobayashi, Ippei, Minato-ku, Tokyo (JP)
(74) Representative: VOSSIUS & PARTNER

(57) **Abstract**

An optical transmission circuit operable with low voltage is disclosed, by which a stable waveform independent of the pulse current or the input signal pattern is output, and degradation of the waveform due to capacitance generated in a common emitter in the drive stage of the light emitting element is prevented. The optical transmission circuit comprises a light emitting element drive circuit (12) for driving a light emitting element (5); a previous-stage circuit (11a) for supplying a pulse current via a emitter-follower circuit; and a pulse current control circuit (2), connected to current sources (3, 4) of the light emitting element drive circuit and the previous-stage circuit, for controlling these current sources so as to fix the output of the light emitting element drive circuit and to control the amplitude of the output voltage from the previous-stage circuit according to the pulse current.

## Description

The present invention relates to an optical transmission circuit preferably applied to an optical transmitter comprising a light emitting element such as a laser diode.

This application is based on Patent Application No. Hei 11-72710 filed in Japan, the contents of which are incorporated herein by reference.

The light emitting elements used in an optical transmitter such as a laser diode have specific temperature characteristics, and the relationship between the current flowing through the light emitting element and the intensity of light emission considerably changes according to variations in temperature around the element (i.e., the ambient temperature). Therefore, the drive circuit for the light emitting element uses a pulse current control circuit so as to fix the output power even when the differential quantum efficiency of the light emitting element changes according to the variation of the ambient temperature.

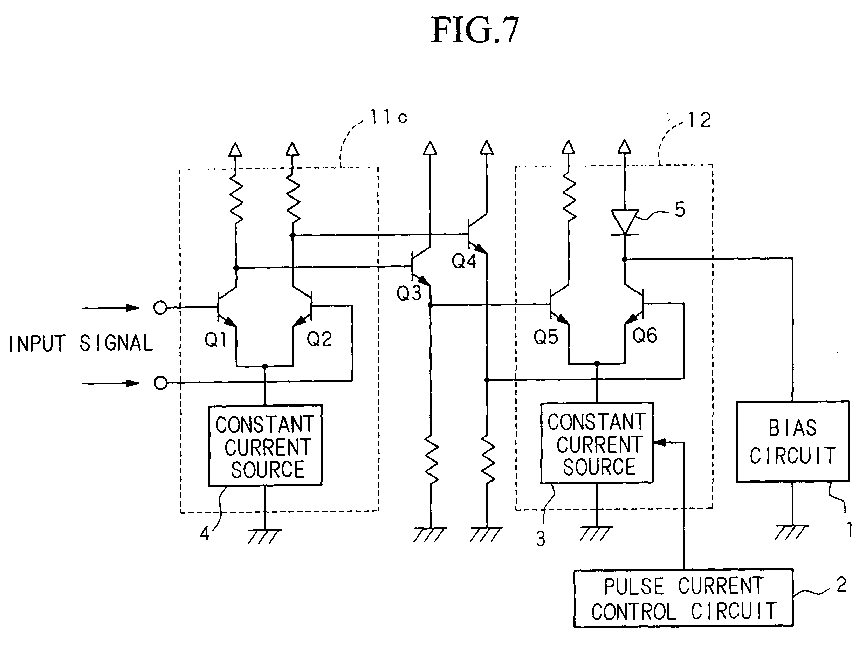

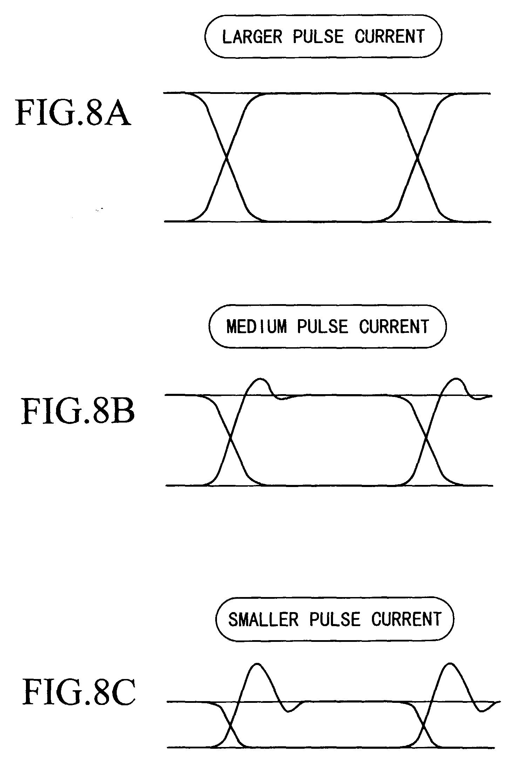

Fig. 7 shows the structure of a conventional optical transmission circuit, and Figs. 8A to 8C show relevant output waveforms.

In the optical transmission circuit of Fig. 7 (the first conventional example), the pulse current flowing through light emitting element 5 is controlled by pulse current control circuit 2. The output from circuit 11c in the previous stage of the light emitting element drive circuit 12 is transmitted to the drive circuit 12 via emitter followers Q3 and Q4. Reference numeral 1 indicates bias circuit, and reference numerals 3 and 4 indicate constant current sources.

In the wiring design of the optical transmission circuit shown in Fig. 7, it is necessary to consider currents of a few tens of mA flowing through the wiring. Therefore, the width of the wiring must be thick, and the common emitter of the light emitting element drive circuit 12 has a capacitance. The amplitude of the output voltage (or the voltage amplitude of the output, i.e., the output voltage amplitude) of circuit 11c (in the previous stage of the circuit 12) can be determined based on the slew rate of the output waveform obtained at a specific current value. In this case, if the pulse current is larger than the determined value, then the rise time and the fall time of the output waveform become longer, while if the pulse current is smaller than the determined value, then the ringing of the output waveform becomes larger. Accordingly, these phenomena cause a reduction of the margin of the masking specification.

Figs. 8A to 8C show the above phenomena, that is, show the ringing states of each output waveform. Figs. 8A to 8C respectively show the ringing states with a larger pulse current (8A), a medium pulse current (8B), and a smaller pulse current (8C). According to these figures, it is obvious that the output waveform depends on the pulse current.

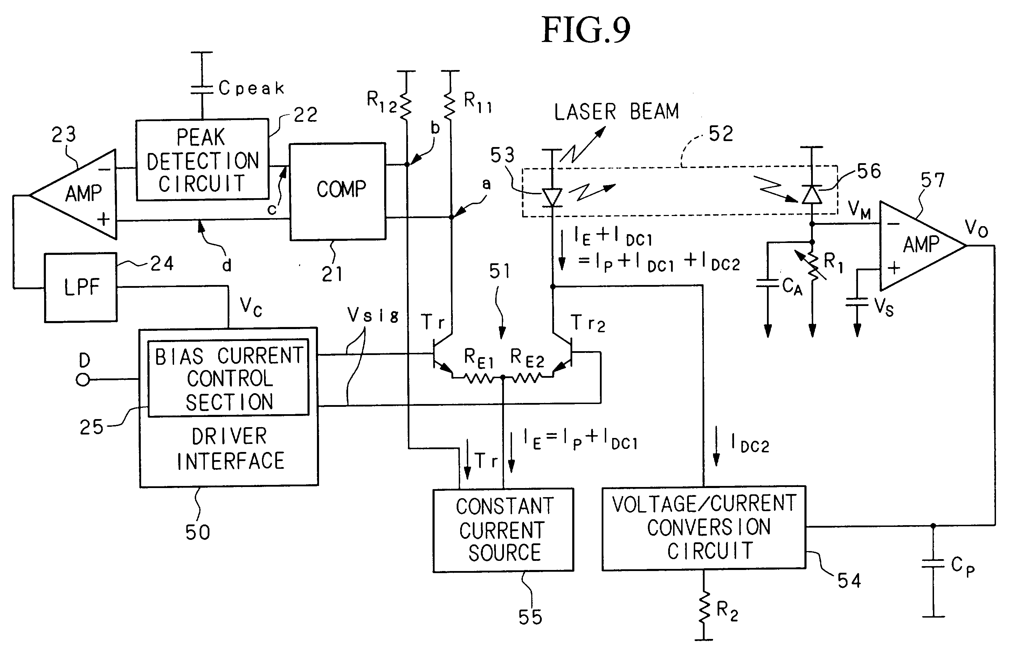

Japanese Unexamined Patent Application, First Publication, Hei 4-129284 discloses an example of the optical transmitter for preventing the output waveform from depending on the pulse current. Fig. 9 shows an embodiment disclosed in the document.

In the embodiment of Fig. 9 (the second conventional example), the drive circuit for driving the light emitting element 53 has a resistance provided as a counterpart to the light emitting element. The peak value of the voltage drop of the resistance is detected in peak detection circuit 2, and the amplitude of the output voltage (i.e., the output voltage amplitude) from amplifier 23 in the previous stage of the drive stage of the light emitting element is controlled by driver interface 50. According to the above control, transistor Tr₂ in the drive stage of the light emitting element is operated in an unsaturated range, thereby preventing ringing of the output waveform. In Fig. 9, reference numeral 21 indicates a comparator, reference numerals 23 and 57 indicate amplifiers, reference numeral 24 indicates a filter, reference numeral 25 indicates a bias current control section, reference numeral 54 indicates a voltage/current conversion circuit, and reference numeral 55 indicates a constant current source.

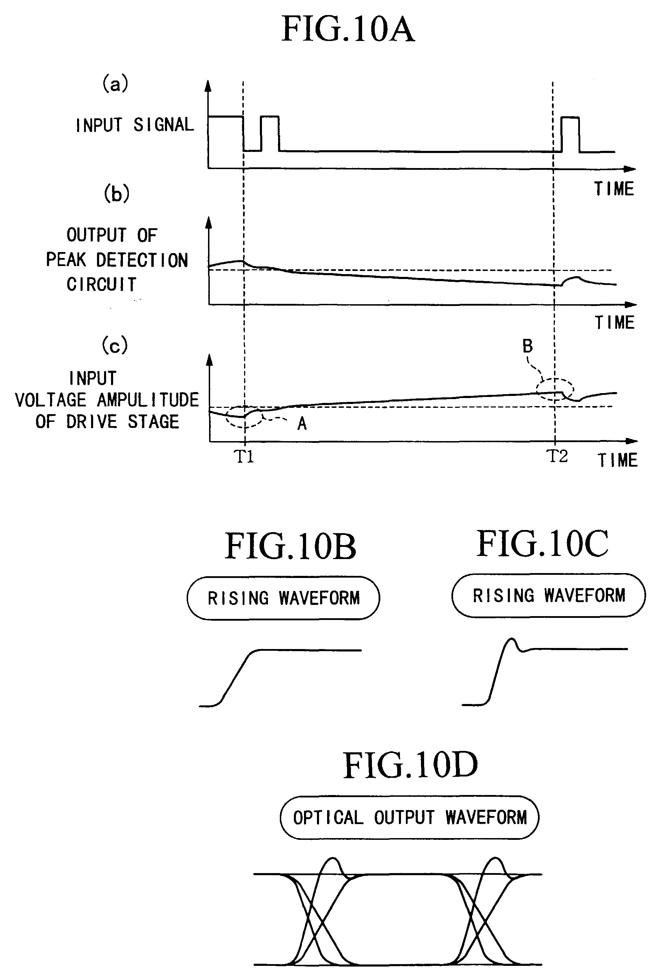

However, the above-explained second conventional example has a problem in which jitter may be included in the output waveform. The reason for this will be explained with reference to the timing chart shown in Fig. 10A. In Fig. 10A, the upper part (a) shows the input signal, the middle part (b) shows the output of peak detection circuit 22, and the lower part (c) shows the amplitude of the input voltage (or the voltage amplitude of the input, i.e., the input voltage amplitude) to the drive stage. Fig. 10B shows an enlarged rising waveform at T1 of the input voltage amplitude of the drive stage (see dotted circle A in the above part (c)), and Fig. 10C shows an enlarged rising waveform at T2 of the input voltage amplitude of the drive stage (see dotted circle B in the above part (c)). Fig. 10D shows the optical output waveform.

When a random-pattern input signal is supplied as shown in part (a) of Fig. 10A, the output value of the peak detection circuit 22 varies according to the above random input pattern (see part (b)), and the output voltage amplitude of the circuit in the previous stage of the drive stage of the light emitting element also varies (see part (c)). As a result, the slew rate of the output waveform of the drive stage of the light emitting element changes (see Figs. 10B and 10C); thus, jitter occurs in the optical output waveform (see Fig. 10D) and the transmission characteristics are degraded.

Additionally, the above second conventional example has another problem in that it is difficult to reduce the voltage of the power. The reason for this is that transistor Tr₂ in the drive stage of the light emitting element must be operated in an unsaturated range; thus, emitter resistor 51 of this drive stage is necessary. That is, when the light emitting element is driven, a voltage drop caused by the resistor 51 occurs.

In consideration of the above circumstances, an objective of the present invention is to provide an optical transmission circuit, operable with low voltage, in which the amplitude of the input voltage to the drive stage of the light emitting element is controlled according to the pulse current, so as to make the output waveform stable and to reduce the dependency of the output waveform (of the relevant optical transmitter) on the pulse current or the input signal pattern, and to prevent degradation of the waveform due to capacitance generated in a common emitter in the drive stage of the light emitting element.

Therefore, the present invention provides an optical transmission circuit comprising:
a light emitting element;
a light emitting element drive circuit, having a current source, for driving the light emitting element;
a previous-stage circuit, provided in the previous stage of the light emitting element drive circuit and having a current source, for supplying a pulse current via a emitter-follower circuit; and
a pulse current control circuit, connected to the current sources of the light emitting element drive circuit and the previous-stage circuit, for controlling these current sources so as to fix the output of the light emitting element drive circuit and to control the amplitude of the output voltage (or the voltage amplitude of the output) from the previous-stage circuit according to the pulse current.

Generally, the current source of the previous-stage circuit depends on the pulse current. Preferably, the optical transmission circuit further comprises a constant current source independent of the pulse current, for supplying current to the previous-stage circuit together with the current source dependent on the pulse current.

According to the above structure, the pulse current control circuit controls the current source of the light emitting element drive circuit (i.e., drive stage) so as to fix the power of the optical output, and also controls the output voltage amplitude of the previous-stage circuit according to the pulse current (that is, the input voltage amplitude of the light emitting element drive circuit is controlled to change according to the pulse current), thereby reducing the dependency of the ringing of the output waveform on the pulse current.

In addition, it is unnecessary to use the transistor of the light emitting element drive stage in an unsaturated range so as to suppress the ringing. Therefore, the transistor of the light emitting element drive stage does not need emitter resistance, and thus a voltage drop according to the emitter resistance does not occur.

Accordingly, it is possible to provide an optical transmission circuit, operable with low voltage, for preventing degradation of the wavelength due to capacitance generated in a common emitter in the light emitting element drive circuit, and outputting a stable waveform independent of the pulse current. In addition, the peak detection of the data signal is not used for controlling the input voltage amplitude of the light emitting element drive stage. Therefore, no peak-detection error dependent on the input signal pattern occurs and the output voltage amplitude of the previous stage of the light emitting element drive stage is stable, so that the output waveform does not have jitter.

### BRIEF DESCRIPTION OF THE DRAWINGS

Fig. 1 is a circuit diagram showing the structure of the optical transmission circuit as an embodiment according to the present invention.
Fig. 2 is a graph showing the relationship between the pulse current and the amplitude of the input voltage of the drive stage, which compares the results of the embodiment of Fig. 1 and the conventional example.
Figs. 3A to 3C show output waveforms obtained in the embodiment of Fig. 1.
Fig. 4 is a graph showing the relationship between the pulse current and the ringing amount, which compares the results of the embodiment of Fig. 1 and the conventional examples.
Fig. 5 is a circuit diagram showing the structure of the optical transmission circuit as another embodiment according to the present invention.
Fig. 6 is a graph showing the relationship between the pulse current and the amplitude of the input voltage of the drive stage in the embodiment of Fig. 5.
Fig. 7 is a circuit diagram showing the structure of the optical transmission circuit of the first conventional example.
Figs. 8A to 8C are graphs showing output waveforms obtained in the first conventional example.
Fig. 9 is a circuit diagram showing the structure of the optical transmission circuit of the second conventional example.
Fig. 10A is a timing chart for explaining the reason for jitter in the output waveform. Figs. 10B and 10C show enlarged rising waveforms of the input voltage amplitude of the drive stage. Fig. 10D shows the relevant optical output waveform.

### DESCRIPTION OF THE PREFERRED EMBODIMENTS

Hereinafter, the embodiments according to the present invention will be explained in detail with reference to the drawings.

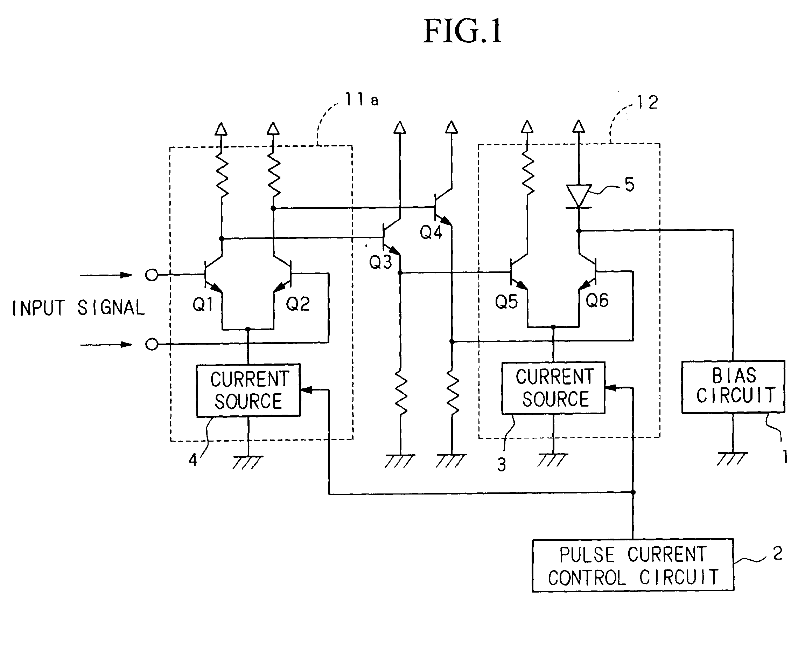

Fig. 1 is a circuit diagram showing an embodiment of the present invention. In the figure, reference numeral 5 indicates a light emitting element. The pulse current flowing through the light emitting element 5 is controlled by pulse current control circuit 2. The pulse current control circuit 2 is connected to current source 3 of light emitting element drive circuit 12, and also to current source 4 of circuit 11a in the previous stage of the light emitting element drive circuit 12 so as to control the amplitude of the output voltage (i.e., output voltage amplitude) of circuit 11a. The output from the circuit 11a in the previous stage of the light emitting element drive circuit 12 is connected via emitter followers Q3 and Q4 to the circuit 12.

That is, the pulse current control circuit 2 controls the current source 3 of the light emitting element drive circuit 12 so as to fix the power of the optical output, and is also connected to the current source 4 of the above circuit 11a and controls the amplitude of the signal of the circuit 11a according to the pulse current, thereby reducing the dependency of the ringing of the output waveform on the pulse current. In addition, no emitter resistance is necessary in the light emitting element drive circuit 12, and only the voltage supplied to the light emitting element 5 and transistor Q6 has a voltage drop; thus, the power supply voltage can be reduced.

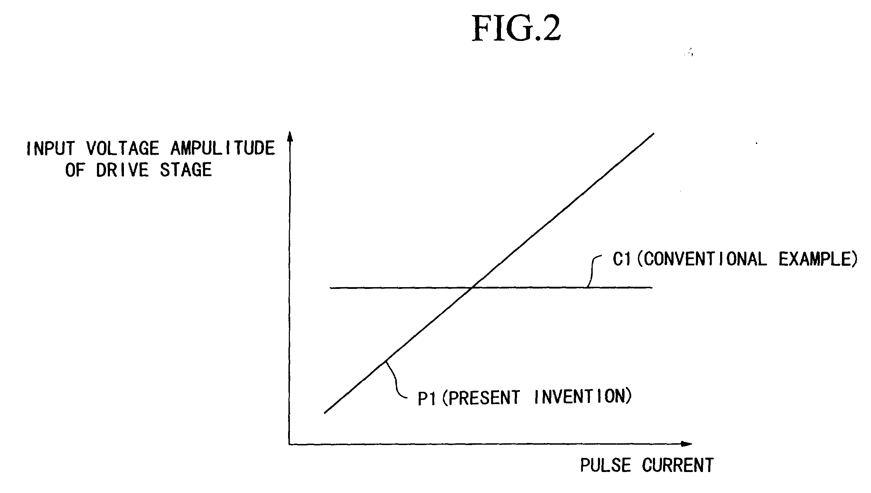

The operation of the present embodiment will be explained with reference to Figs. 2, 3A-3C, and 4, which include conventional data to be compared with the results of the present embodiment.

Fig. 2 is a graph diagram showing the relationship between the pulse current and the amplitude of the input voltage (i.e., the input voltage amplitude) of the drive stage. In Fig. 2, the gradient of line P1 with respect to the present embodiment depends on the current ratio of current source 3 to current source 4. If the gradient is too small, then even when the pulse current is increased, the amplitude of the signal of circuit 11a is not increased. Therefore, the output waveform is degraded by noise or the like. On the other hand, if the gradient is too large, then as the pulse current increases, the output voltage amplitude of circuit 11a also increases. Here, the power supply voltage applied to each of emitter followers Q3 and Q4 and the transistor of the light emitting element drive circuit 12 is substantially fixed. Therefore, the power supply voltage applied to the transistor of current source 4 is limited. The current ratio of current source 3 to current source 4 is suitably determined in consideration of the above circumstances.

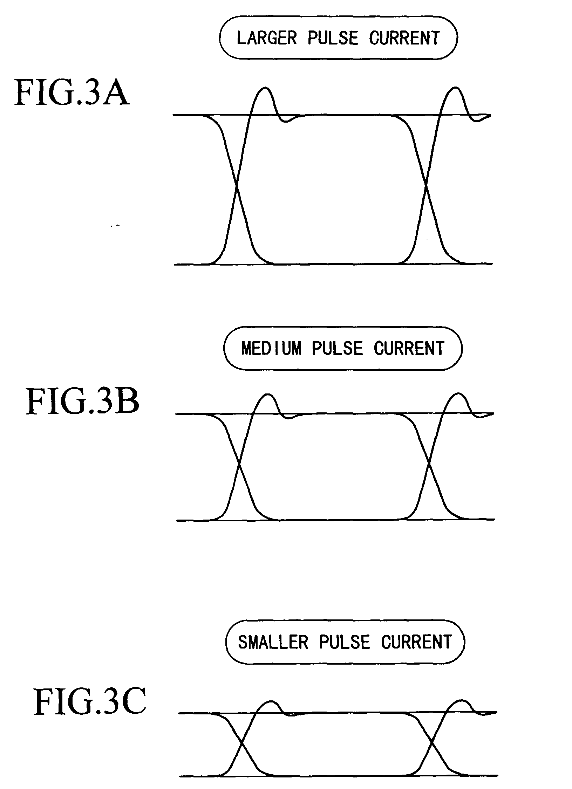

In the conventional example (see line C1 in Fig. 2), the input voltage amplitude of the drive stage of the light emitting element is fixed regardless of the pulse current; thus, as shown in Figs. 10A to 10D, the ringing of the optical output waveform considerably varies according to a change of the pulse current. In contrast, in the present embodiment, the input voltage amplitude of the drive circuit 12 is controlled so as to make the amplitude proportional to the pulse current (see fig. 2). Therefore, with a smaller pulse current (with which a large ringing occurs in the conventional case), the input voltage amplitude of the light emitting element drive circuit 12 is made smaller and ringing is prevented, while with a larger pulse current, the opposite operation is performed. Therefore, the optical output waveform is always stable regardless of the amplitude of the pulse current (see Figs. 3A to 3C). Figs. 3A to 3C respectively show the optical output waveforms with a larger pulse current (3A), a medium pulse current (3B), and a smaller pulse current (3C).

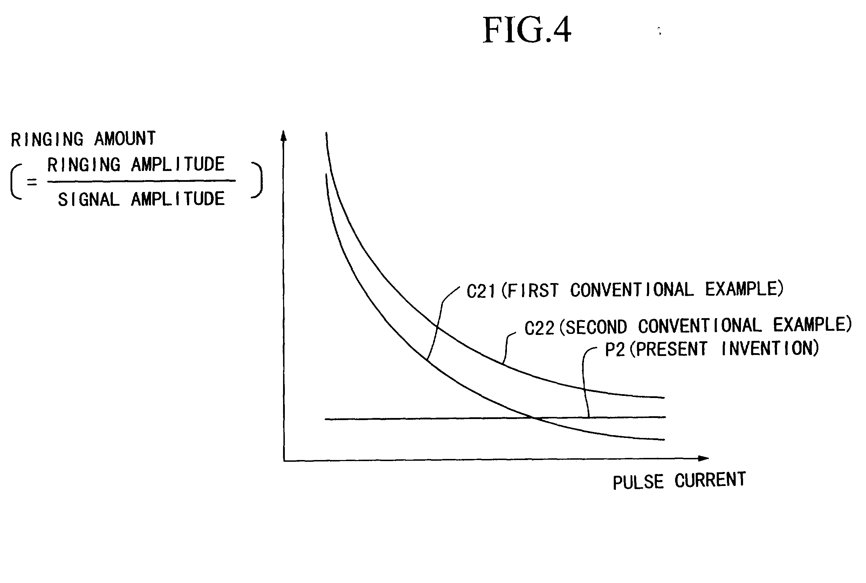

Fig. 4 is a graph diagram showing the relationship between the pulse current and the amount of ringing. In the graph, line P2 shows the relationship for the present embodiment, and curves C21 and C22 show the relationship for the first and second conventional examples. The amount of ringing (i.e., ringing amount) is defined by "ringing amplitude / signal amplitude". In the present embodiment, the input voltage amplitude of the light emitting element drive circuit 12 is controlled so as to change the input voltage amplitude according to the pulse current; thus, the output waveform is stable. In contrast, in either conventional example, the ringing amount changes according to the pulse current.

In the conventional examples, when the pulse current is increased or decreased according to the ambient temperature, the ringing amount varies. Therefore, even when the input voltage amplitude of the drive stage of the light emitting element is controlled to have an optimum value at a pulse current value, the output waveform cannot be stable. Therefore, in either conventional example, the setting value of the output voltage amplitude of the previous stage of the light emitting element drive stage is changed; however, the ringing still depends on the pulse current in either case. In contrast, in the present embodiment, the ringing amount is independent of the pulse current and is stable, and it indicates that the waveform is stable.

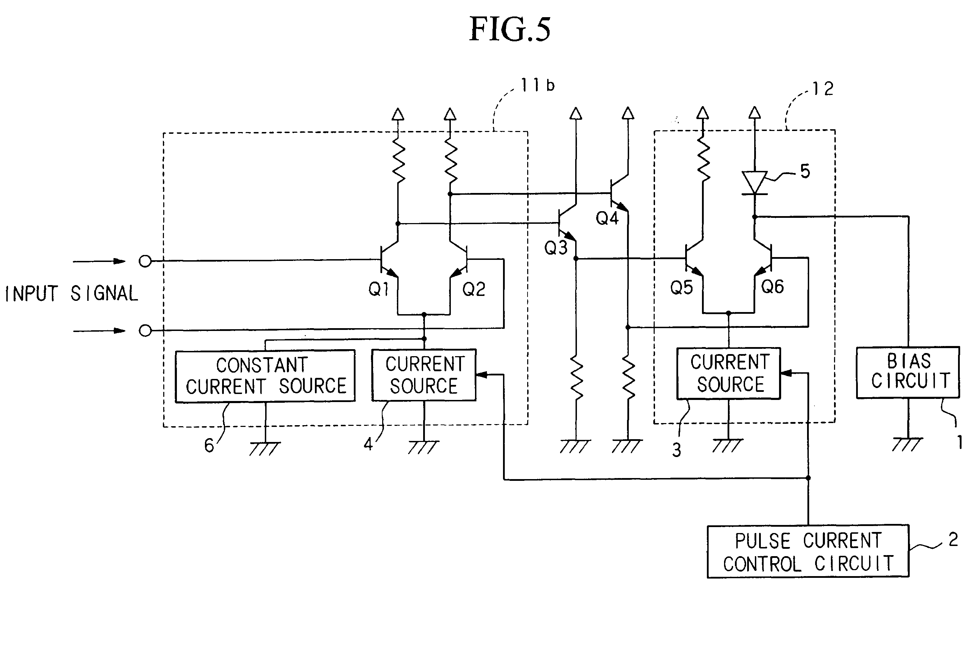

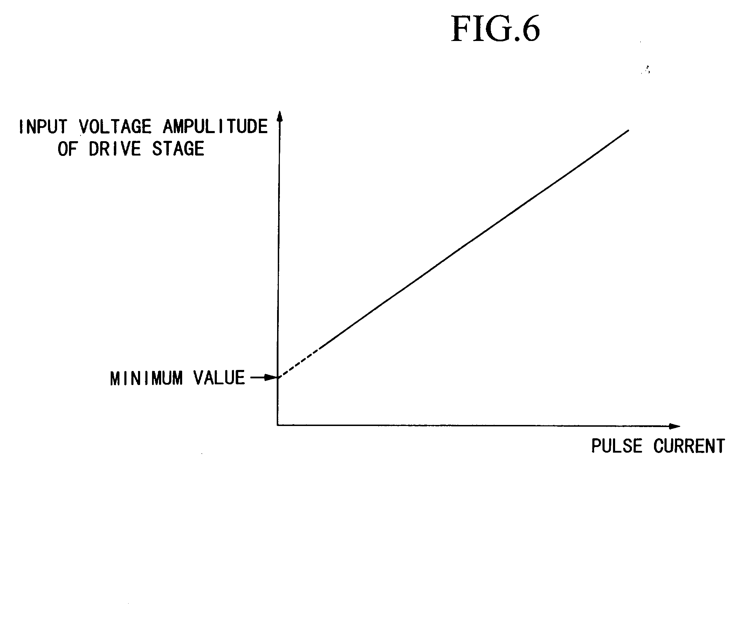

Fig. 5 is a circuit diagram showing another embodiment according to the present invention. In the embodiment shown in Fig. 1, when the light emitting element 5 is driven with a smaller pulse current, the input voltage amplitude of the drive stage of the light emitting element is decreased so that the S/N ratio and the transmission characteristic may be degraded. In order to prevent such degradation, in the embodiment of Fig. 5, constant current source 6 independent of the pulse current is also used together with current source 4 (the same source as that in Fig. 1) dependent on the pulse current, so as to supply current to the circuit 11b in the previous stage of the drive stage of the light emitting element. Fig. 6 shows the relationship between the pulse current and the input voltage amplitude of the drive stage of the light emitting element in the present embodiment.

Here, the structural elements and features other than the above addition of the constant current source 6 to circuit 11b are the same as those of the embodiment as shown in Fig. 1. Therefore, as shown by the graph in Fig. 6, the input voltage amplitude of the drive stage of the light emitting element is controlled to have a suitably-predetermined initial value (i.e., the minimum value of the input voltage amplitude of the drive stage) and to increase from the initial value in proportion to the pulse current.

## Claims

1. An optical transmission circuit comprising:
a light emitting element (5);
a light emitting element drive circuit (12), having a current source (3), for driving the light emitting element; and
a previous-stage circuit (11a), provided in the previous stage of the light emitting element drive circuit and having a current source (4), for supplying a pulse current via a emitter-follower circuit, and
the optical transmission circuit characterized by comprising:
a pulse current control circuit (2), connected to the current sources of the light emitting element drive circuit and the previous-stage circuit, for controlling these current sources so as to fix the output of the light emitting element drive circuit and to control the amplitude of the output voltage from the previous-stage circuit according to the pulse current.

2. An optical transmission circuit as claimed in claim 1, wherein the current source of the previous-stage circuit depends on the pulse current, and
the optical transmission circuit is characterized by further comprising:
a constant current source (6) independent of the pulse current, for supplying current to the previous-stage circuit together with the current source dependent on the pulse current.
